# EUROPEAN PATENT APPLICATION

(11) **EP 4 197 652 A1**
(43) Date of publication of application: **21.06.2023**
(21) Application number: 20950095.8
(22) Date of filing: 16.11.2020
(51) Int. Cl.: B05D 5/08, B05D 7/14, C09D 5/00, C09D 7/61, C09D 127/12, C09D 127/18, A47J 36/02

(54) **NON-STICK COAT LAYER, NON-STICK COATING SET AND COOKING DEVICE**

(30) Priority: 20.08.2020 CN 202010842264
(71) Applicant: Foshan Shunde Midea Electrical Heating Appliances Manufacturing Co., Ltd., Foshan, Guangdong 528311 (CN)
(72) Inventor: SU, Yunjian, Foshan, Guangdong 528311 (CN); LI, Hongwei, Foshan, Guangdong 528311 (CN); CAO, Dahua, Foshan, Guangdong 528311 (CN); WAN, Peng, Foshan, Guangdong 528311 (CN); ZHOU, Yujie, Foshan, Guangdong 528311 (CN); YANG, Ling, Foshan, Guangdong 528311 (CN); WANG, Ting, Foshan, Guangdong 528311 (CN)
(74) Representative: Whitlock, Holly Elizabeth Ann
(86) International application number: PCT/CN2020/128978
(87) International publication number: WO 2022/036892

(57) **Abstract**

Provided are a non-stick coat layer, a non-stick coating set and a cooking device. The non-stick coat layer comprises: an undercoat layer, wherein the tone of at least one material in the undercoat layer is suitable for covering the tone of a base material; and a finishing coat layer, wherein the finishing coat layer is arranged on the surface of the undercoat layer facing away from the base material, and the finishing coat layer comprises a fluorine-containing resin.

## Description

### FIELD

The present disclosure relates to the field of cooking device technologies, and particularly, to a non-stick coating, a non-stick coating material group, and a cooking device.

### BACKGROUND

A surface of a cooking device having a non-stick function is often coated with a non-stick coating that plays a non-stick role. However, the non-stick coating turns yellow after being heated at a high temperature, and a metal substrate material of the cooking device will also have different degrees of yellowing after being heated at a high temperature. Such a yellowing phenomenon greatly limits a color selection range of the non-stick coating. Therefore, the relevant technology of the current cooking device having the non-stick function is still to be improved.

### SUMMARY

The present disclosure aims to solve at least one of the technical problems in the related art. To this end, one object of the present disclosure is to provide a non-stick coating capable of effectively alleviating yellowing.

In an aspect, the present disclosure provides a non-stick coating. According to embodiments of the present disclosure, the non-stick coating includes: an undercoat, wherein a hue of at least one material in the undercoat is adapted to shield a hue of a substrate material; and a topcoat disposed on a surface of the undercoat facing away from the substrate material, the topcoat including a fluorine-containing resin. In the non-stick coating, by adding a material capable of shielding a hue of the substrate material into the undercoat, the hue of the substrate material can be effectively shielded. Therefore, high temperature yellowing problems of the non-stick coating and the substrate material provided with the non-stick coating can be effectively solved on the basis of no change in performance of the non-stick coating.

According to embodiments of the present disclosure, the hue of the at least one material in the undercoat is adapted to shield a hue change of the substrate material.

According to embodiments of the present disclosure, the hue of the at least one material in the undercoat shields at least 90% of the hue of the substrate material, or the hue of the at least one material of the undercoat shields at least 90% of a hue change of the substrate material.

According to embodiments of the present disclosure, the undercoat includes a first pigment having a first hue. The first hue is adapted to shield the hue of the substrate material. According to embodiments of the present disclosure, the topcoat includes a second pigment, and a hue of the second pigment is identical to or different from the hue of the first pigment.

According to embodiments of the present disclosure, a color difference ΔE between a hue of the non-stick coating and the hue of the substrate material ranges from 2 to 8, with the hue of the substrate material as a benchmark.

According to embodiments of the present disclosure, the color difference ΔE between the hue of the non-stick coating and the hue of the substrate material ranges from 2.5 to 6.

According to embodiments of the present disclosure, the non-stick coating takes on the hue of the second pigment or a hue between the hue of the first pigment and the hue of the second pigment.

According to embodiments of the present disclosure, the first pigment includes at least one of a white pigment or a whitish pigment, and the second pigment includes a metallic-colored pigment.

According to embodiments of the present disclosure, a color difference between the hue of the first pigment and a white hue ranges from 0 to 30, with the white hue as a benchmark.

According to embodiments of the present disclosure, the color difference between the hue of the first pigment and the white hue ranges from 0 to 15, with the white hue as the benchmark.

According to embodiments of the present disclosure, the metallic-colored pigment is a flake-shaped pigment; and orthographic projections of at least two flakes of the flake-shaped pigment in a direction perpendicular to the non-stick coating overlap with each other.

According to embodiments of the present disclosure, a hue taken on by the non-stick coating is substantially identical to the hue of the substrate material.

According to embodiments of the present disclosure, the undercoat includes a first matrix resin and the first pigment dispersed in the first matrix resin. The undercoat satisfies at least one of the following conditions: the first pigment includes a white pigment, the white pigment including at least one of titanium, a titanium compound, zinc oxide, aluminum oxide, or mica; the first pigment has a particle size ranging from 5 µm to 25 µm; the first matrix resin includes at least one of polyethersulfone or polytetrafluoroethylene; the undercoat has a thickness ranging from 6 µm to 30 µm; or a mass percentage of the first pigment ranges from 5% to 40%, based on a total mass of the undercoat.

According to embodiments of the present disclosure, the mass percentage of the first pigment ranges from 10% to 27%, based on the total mass of the undercoat.

According to embodiments of the present disclosure, the topcoat includes the fluorine-containing resin and the second pigment dispersed in the fluorine-containing resin. The topcoat satisfies at least one of the following conditions: the second pigment includes a metallic-colored pigment, the metallic-colored pigment including at least one of silver powder or aluminum powder; the fluorine-containing resin includes polytetrafluoroethylene; the topcoat has a thickness ranging from 8 µm to 20 µm; or a mass percentage of the second pigment ranges from 1.5% to 12%, based on a total mass of the topcoat.

According to embodiments of the present disclosure, the non-stick coating satisfies at least one of the following conditions: the titanium compound includes titanium oxide; or the silver powder and the aluminum powder each independently have a particle size ranging from 5 µm to 100 µm.

According to embodiments of the present disclosure, the non-stick coating satisfies at least one of the following conditions: the undercoat further includes at least one of a high temperature resistant resin, a first surfactant, a first pH regulator, or a wear resistant particle; or the topcoat further includes at least one of a second surfactant or a second pH regulator.

According to embodiments of the present disclosure, the non-stick coating satisfies at least one of the following conditions: the high temperature resistant resin includes at least one of polyphenylene sulfide, polyamide-imide, or polyetheretherketone; the first surfactant and the second surfactant each independently include at least one of a nonionic surfactant or an anionic surfactant; the first pH regulator and the second pH regulator each independently include at least one of ammonia water, triethylamine, or diethanolamine; or the wear resistant particle includes at least one of Al₂O₃, SiO₂, or SiC.

According to embodiments of the present disclosure, a first matrix resin is a mixture of polyethersulfone and polytetrafluoroethylene, the white pigment is titanium oxide, the fluorine-containing resin is polytetrafluoroethylene, and the metallic-colored pigment is silver powder or aluminum powder.

In another aspect, the present disclosure provides a non-stick coating material group. According to embodiments of the present disclosure, the non-stick coating material group includes: an undercoat material and a topcoat material. A hue of at least one material in the undercoat material is adapted to shield a hue of a substrate material; and the topcoat material includes a fluorine-containing resin. In the non-stick coating material group, by adding into the undercoat material a material that is adapted to shield the hue of the substrate material, the yellowing of the substrate material provided with a coating formed by the non-stick coating material group and the yellowing of the coating itself can be shielded.

According to embodiments of the present disclosure, the undercoat material includes:

| | |
|---|---|
| a first matrix resin dispersion liquid | 30 parts to 50 parts by weight; |
| a high temperature resistant resin | 10 parts to 30 parts by weight; |
| a first solvent | 20 parts to 50 parts by weight; |
| a first pigment | 1 part to 12 parts by weight; |
| a first surfactant | 0 part to 10 parts by weight; |
| deionized water | 0 part to 50 parts by weight; |
| a first pH regulator | 0 part to 1 part by weight; and |
| a wear resistant particle | 0 part to 3 parts by weight. |

according to the embodiments of the present disclosure, the topcoat material includes:

| | |
|---|---|
| a fluorine-containing resin emulsion | 45 parts to 70 parts by weight; |
| a second solvent | 3 parts to 20 parts by weight; |
| a second pigment | 0.5 part to 5 parts by weight; |
| a second surfactant | 0 part to 10 parts by weight; |
| deionized water | 10 parts to 50 parts by weight; and |
| a second pH regulator | 0 part to 1 part by weight. |

According to embodiments of the present disclosure, the non-stick coating material group is used to form the non-stick coating described above, the undercoat material is used to form the undercoat; and the topcoat material is used to form the topcoat.

In yet another aspect, the present disclosure provides a cooking device. According to embodiments of the present disclosure, the cooking device includes: a metal substrate; and a non-stick coating disposed on a surface of the metal substrate. The non-stick coating is the non-stick coating described above, or a non-stick coating formed by the non-stick coating material group described above.

According to embodiments of the present disclosure, a hue of at least part of the cooking device in an initial state is identical to a hue of the at least part of the cooking device in a heated state; or a color difference ΔE between the hue of the at least part of the cooking device in the initial state and the hue of the at least part of the cooking device in the heated state is smaller than 4.

According to embodiments of the present disclosure, a hue of at least part of the cooking device in an initial state is identical to a hue of the at least part of the cooking device in a heated state; or a color difference ΔE between the hue of the at least part of the cooking device in the initial state and the hue of the at least part of the cooking device in the heated state is smaller than 2.

According to embodiments of the present disclosure, the metal substrate includes stainless steel.

According to embodiments of the present disclosure, a surface of the metal substrate is a flat surface, and the non-stick fluorine coating is disposed on the flat surface; or a surface of the metal substrate has a plurality of recessed portions arranged at intervals, and raised surfaces are formed between the plurality of recessed portions, and the non-stick fluorine coating is disposed on an inner wall of each of the plurality of recessed portions.

According to embodiments of the present disclosure, in each of the plurality of recessed potions, a surface of the non-stick coating facing away from the metal substrate is a curved surface having a middle portion convex towards the metal substrate, and is lower than the raised surfaces.

According to embodiments of the present disclosure, an inner wall surface of each of the plurality of recessed portions is a continuous arc surface. In each of the plurality of recessed portions, a bottom of the non-stick coating has a thickness greater than a thickness of a side wall of the non-stick coating.

According to embodiments of the present disclosure, in each of the plurality of recessed portions, the non-stick coating has a thickness gradually increasing in a direction from a top of the recessed portion to a bottom of the recessed portion.

According to embodiments of the present disclosure, a color of the non-stick coating is substantially identical to a color of the raised surfaces.

According to embodiments of the present disclosure, the non-stick coating is constructed as a continuous arc surface. The undercoat and the topcoat in the non-stick coating are each constructed as a continuous arc surface.

### BRIEF DESCRIPTION OF THE DRAWINGS

The above and/or additional aspects and advantages of the present disclosure will become apparent and more readily appreciated from the following description of embodiments with reference to the accompanying drawings, in which:
FIG. 1 is a schematic diagram of a structure of a non-stick fluorine coating according to an embodiment of the present disclosure;
FIG. 2 is a schematic diagram of a partial structure of a cooking device according to an embodiment of the present disclosure; and
FIG. 3 is a schematic diagram of a partial structure of a cooking device according to another embodiment of the present disclosure.

### DETAILED DESCRIPTION

Embodiments of the present disclosure are described in detail below. The embodiments described below are exemplary, are merely used for explaining the present disclosure, and cannot be understood as limiting the present disclosure. Operations, of which the specific technologies or conditions are not specified in the embodiments, shall be carried out in accordance with the technologies or conditions described in the literature in the art or in accordance with the product specification. The reagents or instruments used without indicating the manufacturers are conventional products available on the market.

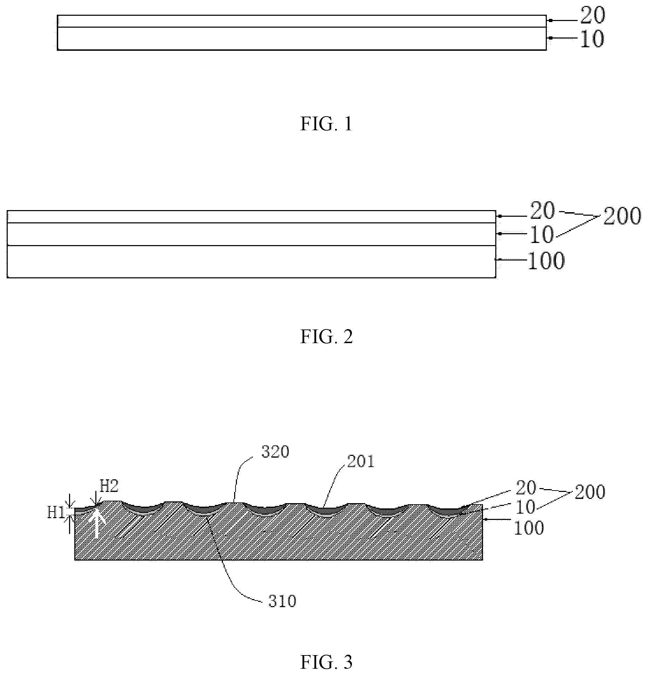

In an aspect, the present disclosure provides a non-stick coating. According to embodiments of the present disclosure, referring to FIG. 1, the non-stick coating includes: an undercoat 10 and a topcoat 20. A hue of at least one material in the undercoat 10 is adapted to shield a hue of a substrate material. The topcoat 20 is disposed on a surface of the undercoat facing away from the substrate material. The topcoat 20 includes a fluorine-containing resin. In the non-stick coating, by adding into the undercoat a material adapted to shield a hue of the substrate material, high temperature yellowing problems of both the non-stick coating and the substrate material provided with the non-stick coating can be effectively solved on the basis of no change in performance of the non-stick coating, and a yellowing resistance performance and an appearance effect of a non-stick coating system are greatly enhanced, which expands an use range of the non-stick coating.

According to the embodiments of the present disclosure, a hue of at least one material in the undercoat is adapted to shield a hue change of the substrate material. Therefore, the non-stick coating may effectively shield the yellowing of the substrate material. In some specific embodiments, the hue of the at least one material in the undercoat shields at least 90% of the hue of the substrate material, or the hue of the at least one material in the undercoat shields at least 90% of the hue change of the substrate material. Therefore, the non-stick coating has a better effect in shielding the yellowing of the substrate material.

According to the embodiments of the present disclosure, the undercoat includes a first pigment having a first hue. The first hue is adapted to shield the hue of the substrate material. Therefore, even if the yellowing of the substrate material occurs during use, the substrate material can be effectively shielded by the undercoat. Thus, the yellowing of the substrate material becomes invisible from an appearance of the product, which can effectively alleviate the problem of the yellowing of the substrate material. Further, an interference of the hue of the substrate material in a hue of the non-stick coating system can be reduced, which advances the appearance effect of the non-stick coating system.

According to some specific embodiments of the present disclosure, to better alleviate the high temperature yellowing problems of the non-stick coating and the substrate material provided with the non-stick coating, the first pigment may include at least one of a white pigment and a whitish pigment. In some embodiments, the white pigment may include at least one of titanium, a titanium compound, zinc oxide, aluminum oxide, or mica. In some embodiments, the titanium compound may include titanium oxide. In some embodiments, the titanium oxide is a white inorganic pigment which is non-toxic and has optimal opacity and optimal whiteness and radiance, and which has a high adhesion force, is not prone to chemical reaction, is always snow white, and has no yellowing after being heated at a high temperature. Therefore, the first pigment has extensive material sources and a better yellowing shielding effect, and has no influence on the non-stick performance of the non-stick coating and a binding force between the non-stick coating and the substrate material.

According to some specific embodiments of the present disclosure, with a white hue as a benchmark, a color difference between the hue of the first pigment and the white hue may be in a range from 0 to 30, particularly from 0 to 15, e.g., 0, 1, 2, 3, 4, 5, 6, 7, 8, 9, 10, 11, 12, 13, 14, 15, 20, 25, 30, etc. The first pigment itself has a better yellowing resistance effect and a better yellowing shielding effect.

According to some embodiments of the present disclosure, a particle size of the first pigment may be in a range from 5µm to 25 µm, e.g., 5 µm, 8 µm, 10 µm, 12 µm, 5 µm, 8 µm, 0 µm, 22 µm, 25 µm, etc. Within this particle size range, the first pigment has a better color developing effect, a better yellowing resistance effect, and a better yellowing shielding effect, can be dispersed easily, and thus can better cooperate with other components in the non-stick coating, facilitating the preparation of the non-stick coating while improving the quality of the non-stick coating. When the particle size of the first pigment is greater than the above range, the first pigment has poor dispersibility in a coating material forming the undercoat, which results in a poor yellowing shielding effect.

According to the embodiments of the present disclosure, a mass percentage of the first pigment ranges from 5% to 40%, particularly from 12% to 27%, e.g., 5%, 8%, 10%, 12%, 13%, 14%, 15%, 16%, 17%, 18%, 19%, 20%, 21%, 22%, 23%, 24%, 25%, 26%, 27%, 30%, 32%, 35%, 8%, 40%, etc., based on a total mass of the undercoat. Within this content range, the non-stick coating has an optimal color effect, an optimal shielding force, and an optimal anti-corrosion performance. Both the bonding force and the anti-corrosion performance of the non-stick coating will be affected if the content of the first pigment is too large, and the shielding force of the non-stick coating will be reduced if the content the first pigment is too small.

According to the embodiments of the present disclosure, it should be understood that, the undercoat may further include a first matrix resin in addition to the first pigment. The first pigment may be dispersed in the first matrix resin. According to some embodiments of the present disclosure, the first matrix resin may include at least one of polyethersulfone or polytetrafluoroethylene. Therefore, the non-stick coating has a better bonding force with the substrate material provided with the non-stick coating, and the non-stick coating also has better non-stick performance.

According to embodiments of the present disclosure, in accordance with use requirements, the undercoat may further include at least one of a high temperature resistant resin, a first surfactant, a first pH regulator, or a wear resistant particle. In particular, the first matrix resin and the high temperature resistant resin have a relatively high bonding force and thus can well bind to the substrate material provided with the non-stick coating, and they also have a relatively good corrosion prevention effect. The high temperature resistant resin may include at least one of polyphenylene sulfide (PPS), polyamide-imide (PAI), or polyetheretherketone (PEEK). The first surfactant may include at least one of a nonionic surfactant or an anionic surfactant. The first pH regulator may include at least one of ammonia water, triethylamine, or diethanolamine. The wear resistant particle includes at least one of Al₂O₃, SiO₂, or SiC. The above-mentioned components can enable the non-stick coating to have a better use effect. In particular, the first surfactant can enable the coating to be more uniform to facilitate storage and can reduce surface energy of the coating material to facilitate construction. The first pH regulator can improve and stabilize the pH value of the coating material, and thus the coating material has a stable viscosity beneficial to construction. The wear resistant particle can greatly improve a wear resistance and a service life of the non-stick coating.

According to embodiments of the present disclosure, the undercoat may have a thickness ranging from 6 µm to 30 µm, e.g., 6 µm, 10 µm, 15 µm, 20 µm, 25 µm, 30 µm, etc. Within this thickness range, the coating material has an optimal corrosion resistance and an optimal wear resistance. If the thickness is too large, the coating is prone to cracking and is prone to sagging during spraying. If the thickness is too small, the corrosion resistance, the wear resistance, and the shielding force of the coating will be reduced.

According to embodiments of the present disclosure, the topcoat may include a second pigment. Adding the second pigment into the topcoat enables the pigment in the topcoat to shield part of the substrate material that is not shielded by the first pigment. A difference in the pigment distributions of the two coats is used to improve a shielding rate to the hue of the substrate material.

According to embodiments of the present disclosure, a hue of the second pigment in the topcoat may be identical to or different from the hue of the first pigment. Therefore, a combination of the first pigment and the second pigment can better alleviate the yellowing problems of the non-stick coating and the substrate material provided with the non-stick coating, and enable the non-stick coating system to take on a better hue, which advances the appearance of the non-stick coating system. On the one hand, using pigments having different hues improves the appearance effect of the non-stick coating system. On the other hand, adding into the topcoat the second pigment different from the first pigment can improve the shielding to the hue of the substrate material by means of a color rendering effect by superposition of the different hues. According to embodiments of the present disclosure, the second pigment includes a metallic-colored pigment. Therefore, the second color is metallic-colored to enable the topcoat to take on a metallic luster, which has a strong shielding force and can effectively alleviate a yellowing influence.

According to embodiments of the present disclosure, the metallic-colored pigment is a flake-shaped pigment, and orthographic projections of at least two flakes of the flake-shaped pigment in a direction perpendicular to the non-stick coating overlap with each other. Therefore, the metallic luster of the coating can be improved to avoid a phenomenon of an uneven color and reduce a possible hue of the substrate material that is not shielded. Further, an occurrence of variegated colors can be reduced to improve the appearance of the product. According to some embodiments of the present disclosure, the metallic-colored pigment may include at least one of silver powder or aluminum powder. In some specific examples, the metallic-colored pigment may include at least one of a silver paste or an aluminum paste. Main components of the aluminum paste are snow flake-shaped aluminum particles and a petroleum solvent, and the aluminum paste is in a paste form. The aluminum paste has features including a smooth and flat surface of the aluminum flake, a concentrated particle size distribution, a regular shape, an excellent light reflection capability, a metallic luster, and a higher shielding capability. Particularly, the smaller the particle size of the aluminum powder and the silver powder, the stronger metallic feeling and the stronger shielding force the aluminum powder and the silver powder have. In some specific embodiments, the silver powder and the aluminum powder each independently have a particle size ranging from 2 µm to 70 µm, in particular from 3 µm to 20 µm, e.g., 2 µm, 3 µm, 5 µm, 10 µm, 20 µm, 30 µm, 40 µm, 50 µm, 60 µm, 70 µm, etc. Within this particle size range, a non-stick fluorine coating has an excellent yellowing alleviating effect.

According to the embodiments of the present disclosure, a mass percentage of the second pigment ranges from 1.5% to 12%, e.g., 1.5%, 2%, 3%, 4%, 5%, 6%, 7%, 8%, 9%, 10%, 11%, 12%, etc., based on a total mass of the topcoat. Within this content range, the coating has an optimal appearance effect and other properties of the coating are unaffected. If the content of the second pigment is too large, too much of the second pigment will be suspended to influence the non-stickiness of the coating and the bonding force of the coating. If the content of the second pigment is too small, the shielding force will be reduced, the color difference becomes larger, and the required appearance effect cannot be achieved.

According to embodiments of the present disclosure, the fluorine-containing resin in the topcoat may include polytetrafluoroethylene (PTFE). A PTFE resin mainly has a non-stick effect, and can impart a good non-stick effect to the non-stick coating. In some specific embodiments, the topcoat may have a thickness ranging from 8 µm to 20 µm, e.g., 8 µm, 10 µm, 12 µm, 15 µm, 18 µm, 20 µm, etc. Within this thickness range, the coating has an optimal non-stick performance and an optimal corrosion resistance performance. The coating will crack if the coating is too thick. The non-stick performance of the coating will decrease if the coating is too thin.

According to embodiments of the present disclosure, in accordance with the use requirements, the topcoat may further include at least one of a second surfactant or a second pH regulator. In some embodiments, the second surfactant may include at least one of a nonionic surfactant or an anionic surfactant. The second pH regulator may include at least one of ammonia water, triethylamine, or diethanolamine. The second surfactant can reduce the surface energy of the coating material to facilitate the construction and can promote stability of the coating material to facilitate the storage. The second pH regulator can stabilize the pH value of the coating material.

According to some embodiments of the present disclosure, the first matrix resin is a mixture of polyethersulfone and polytetrafluoroethylene; the white pigment is titanium oxide; the second matrix resin is the polytetrafluoroethylene; and the metallic-colored pigment is the silver paste or the aluminum paste. Therefore, a cooperation and synergistic effect between different matrix resins and different pigments enables the non-stick coating to have a better shielding capability and thus a better yellowing alleviating effect.

According to embodiments of the present disclosure, the topcoat may cover an entire surface of the undercoat, or may only cover a partial surface of the undercoat. When the topcoat covers the entire surface of the undercoat, the non-stick coating may take on the hue of the second pigment or a hue between the hue of the first pigment and the hue of the second pigment (i.e., the non-stick coating takes on a superposition effect of a color of the first pigment and a color of the second pigment). However, when the topcoat only covers the partial surface of the undercoat, the hue taken on by the non-stick coating is substantially identical to the hue of the substrate material. Therefore, an outer surface of the product can have a consistent hue, which improves the consistency and beauty degree of the appearance.

According to embodiments of the present disclosure, a color difference ΔE between a hue of the non-stick coating and the hue of the substrate material ranges from 2 to 8, particularly from 2.5 to 6, e.g., 2, 2.5, 3, 3.5, 4, 4.5, 5, 5.5, 6, 6.5, 7, 7.5, 8, etc., with the hue of the substrate material as a benchmark. Therefore, a color difference between the non-stick coating and a specific material can be reduced to improve consistency of an overall appearance.

In another aspect, the present disclosure provides a non-stick coating material group. According to embodiments of the present disclosure, the non-stick coating material group includes: an undercoat material and a topcoat material. A hue of at least one material in the undercoat material is adapted to shield a hue of a substrate material. The topcoat material includes a fluorine-containing resin. In the coating material group, by adding into the undercoat material the material adapted to shield the hue of the substrate material, yellowing of the substrate material provided with a coating formed by the non-stick coating material group can be shielded, and the yellowing of the coating itself can also be avoided.

According to some embodiments of the present disclosure, the undercoat material includes: 30 parts to 50 parts by weight of a first matrix resin dispersion liquid; 10 parts to 30 parts by weight of a high temperature resistant resin; 20 parts to 50 parts by weight of a first solvent; 1 part to 12 parts by weight of the first pigment; 0 part to 10 parts by weight of a first surfactant; 0 part to 50 parts by weight of deionized water; 0 part to 1 part by weight of a first pH regulator; and 0 part to 3 parts by weight of a wear resistant particle. With the above components and content ranges, the coating has the optimal corrosion resistance performance, wear resistance performance, and shielding force.

According to embodiments of the present disclosure, the topcoat material includes: 45 parts to 70 parts by weight of a fluorine-containing resin emulsion; 3 parts to 20 parts by weight of a second solvent; 0.5 part to 5 parts by weight of a second pigment; 0 part to 10 parts by weight of a second surfactant; 10 parts to 50 parts by weight of deionized water; and 0 part to 1 part by weight of a second pH regulator. With the above components and content ranges, the coating has the optimal corrosion resistance performance, non-stick performance, and color effect.

According to embodiments of the present disclosure, the first solvent and the second solvent mentioned above are mainly used to dissolve the resin. In some embodiments, the first solvent and the second solvent may each independently include at least one of N-methylpyrrolidone (NMP), ethanol, isopropanol, propylene glycol, glycerol, toluene, xylene, or diethylene glycol ether. Therefore, a dissolving effect is better, and the cost is low.

In yet another aspect, the present disclosure provides a method for preparing the non-stick coating as described above. According to embodiments of the present disclosure, the method includes: stirring and mixing the first solvent, the first surfactant, the deionized water, and the first pH regulator to obtain a first mixture; adding the first matrix resin dispersion liquid and the temperature resistant resin into the first mixture, and mixing well by stirring to obtain a second mixture; adding the first pigment and the wear resistant particles to the second mixture to obtain a undercoat material; stirring and mixing the second solvent, the second surfactant, deionized water, and the second pH regulator to obtain a third mixture; adding a fluorine-containing resin emulsion into the third mixture, and mixing well by stirring to obtain a fourth mixture; adding the second pigment into the fourth mixture to obtain a topcoat material; applying the undercoat material by compressed air spraying, and performing first baking and curing to obtain a undercoat; and applying the topcoat material on a surface of the undercoat by compressed air spraying, and performing second baking and curing to obtain a topcoat. The method is simple and convenient to operate, has no harsh requirements for the device and the technical personnel, and is thus easy for industrial production, low in cost, and good in economic efficiency.

In some embodiments, the method may include the following steps: adding the first solvent, the first surfactant, deionized water, and the first pH regulator in a proper proportion into a stirring container to perform stirring and mixing, adding a polyethersulfone (PES) dispersion liquid and the temperature resistant resin, mixing well by stirring, adding titanium oxide and the wear resistant particles to prepare a undercoat material, applying the undercoat material onto a rough and clean surface of a metal substrate material by compressed air spraying, and performing moderate baking, curing and cooling to obtain a undercoat having a film thickness ranging from 6 µm to 30 µm; and adding the second solvent, the second surfactant, deionized water, and the second pH regulator in a proper proportion into a stirring container to perform stirring and mixing, adding a polytetrafluoroethylene (PTFE) emulsion, mixing well by stirring, adding the aluminum paste or silver paste to prepare a topcoat material, applying the topcoat material onto a surface of the undercoat by compressed air spraying, and performing moderate baking, curing and cooling to obtain a topcoat having a film thickness ranging from 8 µm to 20 µm.

In yet still another aspect, the present disclosure provides a cooking device. According to embodiments of the present disclosure, referring to FIG. 2 and FIG. 3, the cooking device includes: a metal substrate 100; and a non-stick coating 200 disposed on a surface of the metal substrate 100. Here, the non-stick coating 200 is the non-stick coating as described above, or a non-stick coating formed by the non-stick coating material group as described above. In some embodiments, the non-stick coating 200 may include an undercoat 10 and a topcoat 20. The cooking device has a better non-stick performance, and meanwhile, has no yellowing after being heated at a high temperature.

It should be understood that a specific type of the cooking device is not particularly limited, and may be any cooking device, e.g., including but not limited to a pot (a wok, a soup pot, a stew pot, a milk pot, a pan, etc.), an electric cooker inner container, a pressure cooker inner container, etc., and details thereof will not be repeated herein.

According to some embodiments of the present disclosure, a hue of at least part of the cooking device in an initial state is identical to a hue of the at least part of the cooking device in a heated state. According to another embodiment of the present disclosure, a color difference ΔE between the hue of the at least part of the cooking device in the initial state and the hue of the at least part of the cooking device in the heated state is smaller than 4, preferably smaller than 2. In some embodiments, the color difference ΔE may be 3.5, 3, 2.5, 2, 1.5, 1, 0.5, 0.2, 0, etc. Therefore, the cooking device has a good appearance consistency.

According to embodiments of the present disclosure, the metal substrate may include stainless steel. Since the stainless steel is prone to yellowing after being heated at a high temperature, using the stainless steel substrate in combination with the non-stick coating or the non-stick coating material can well alleviate the yellowing problem of the metal substrate and the coating itself.

According to some embodiments of the present disclosure, referring to FIG. 2, a surface of the metal substrate is a flat surface, and the non-stick coating is disposed on the flat surface. Therefore, excellent non-stick performance is provided. In some other embodiments, referring to FIG. 3, a surface of the metal substrate 100 has a plurality of recessed portions 310 arranged at intervals, raised surfaces 320 are formed between the plurality of recessed portions 310, and the non-stick coating 200 is disposed on an inner wall of each of the plurality of recessed portions 310. Therefore, an adhesion force of the non-stick coating can be improved, scratch resistance of the non-stick coating is reduced, and an external force is not prone to contact the non-stick coating at the recess positions. Therefore, the adhesion force of the non-stick coating at the recessed positions is improved, and the non-stick coating has long-term non-stick performance, better wear resistance, and a long-lasting service life.

According to embodiments of the present disclosure, referring to FIG. 3, in each of the plurality of recessed potions 310, a surface 201 of the non-stick coating 200 facing away from the metal substrate 100 is a curved surface having a middle portion convex towards the metal substrate 100, and is lower than the raised surfaces 320. Therefore, a probability that the coating is scraped can be reduced, and the adhesion force of the coating at the plurality of recessed portions is improved. In addition, an air layer can be formed between the top of the coating and the raised surfaces to improve the non-stick performance to food. Further, during heating, a hot air layer can be formed above the coating to promote uniform heating of the food.

According to embodiments of the present disclosure, referring to FIG. 3, an inner wall surface of each of the plurality of recessed portions 310 is a continuous arc surface; and in each of the plurality of recessed portions 310, a bottom of the non-stick coating 200 has a thickness H1 greater than a thickness H2 of a side wall of the non-stick coating 200. Since the inner wall surface of each of the plurality of recessed portions is the continuous arc surface, an accumulation of the coating on a lower portion of the recessed portion can be reduced to promote flowing of the coating towards the bottom of the recessed portion, and an accumulation of heat at a position of the coating in the recessed portion is reduced, avoiding forming a thermal crack that reduces corrosion resistance performance at that position. Since the bottom of the coating has a thickness greater than the thickness of the side wall of the coating, a heat transfer capability of the bottom of the coating can be improved to improve overall thermal conductivity of the coating.

According to embodiments of the present disclosure, referring to FIG. 3, in each of the plurality of recessed portions 310, the non-stick coating 200 has a thickness increasing in a direction from a top of the recessed portion 310 to a bottom of the recessed portion 310. Therefore, the heat transfer capability of the bottom of the coating can be improved to promote the overall thermal conductivity of the coating.

According to embodiments of the present disclosure, referring to FIG. 3, the non-stick coating 200 is constructed as a continuous arc surface, and the undercoat 10 and the topcoat 20 in the non-stick coating are each constructed as a continuous arc surface. Therefore, an accumulation of energy in the coating can be avoided to reduce a formation of thermal corrosion and improve the corrosion resistance performance of the coating.

According to embodiments of the present disclosure, a color of the non-stick coating is substantially identical to a color of the raised surfaces. Thus, the cooking device has a consistent and aesthetic appearance.

The examples of the present disclosure are described in detail below.

Each of the following examples adopted a method for preparing the non-stick coating as follows:
adding a first solvent, a first surfactant, deionized water, and a first pH regulator in a proper proportion into a stirring container to perform stirring and mixing, adding a first matrix resin dispersion liquid and a temperature resistant resin, mixing well by stirring, adding a first pigment and wear resistant particles to prepare an undercoat material, applying the undercoat material onto a rough and clean surface of the metal substrate made of stainless steel by compressed air spraying, and performing moderate baking, curing and cooling to obtain an undercoat; and
adding a second solvent, a second surfactant, deionized water, and a second pH regulator in a proper proportion into a stirring container to perform stirring and mixing, adding a second matrix resin emulsion, mixing well by stirring, adding a second pigment (this step was omitted when no second pigment is contained) to prepare a topcoat material, applying the topcoat material onto a surface of the undercoat by compressed air spraying, and performing moderate baking, curing and cooling to obtain a topcoat.

### Example 1

An undercoat: 30 parts by weight of PES; 30 parts by weight of PPS; 35 parts by weight of NMP; 15 parts by weight of titanium oxide having a particle size of 10 µm; 25 parts by weight of deionized water; 0.5 part by weight of ammonia water; and 3 parts by weight of Al₂O₃. The formed undercoat had a thickness of 6 µm. A mass percentage of the titanium oxide in the undercoat was 10%.

A topcoat: 50 parts by weight of PTFE; 5 parts by weight of NMP; 10 parts by weight of a nonionic surfactant; and 25 parts by weight of deionized water. The formed topcoat had a thickness of 8 µm.

### Comparative Example 1

A PTFE coating: stainless steel was used as a substrate. The PTFE coating had a thickness of 14 µm.

### Example 2

An undercoat was the same as that of the Example 1.

A topcoat: 60 parts by weight of PTFE, 7 parts by weight of NMP, 1.2 parts by weight of aluminum powder having a particle size of 3 µm, 5 parts by weight of a nonionic surfactant, and 40 parts by weight of deionized water. The formed topcoat had a thickness of 8 µm. A mass percentage of the aluminum powder in the topcoat was 3%.

### Example 3

The Example 3 was the same as the Example 2, except that 40 parts by weight of the titanium oxide were used in the undercoat and a mass percentage of the titanium oxide in the undercoat was 27%.

### Example 4

The Example 4 was the same as the Example 2, except that 6 parts by weight of the titanium oxide were used in the undercoat and a mass percentage of the titanium oxide in the undercoat was 4%.

### Example 5

The Example 5 was the same as the Example 2, except that 60 parts by weight of the titanium oxide were used in the undercoat and a mass percentage of the titanium oxide in the undercoat was 45%.

### Example 6

The Example 6 was the same as the Example 2, except that the titanium oxide in the undercoat had a particle size of 40 µm.

### Example 7

The Example 7 was the same as the Example 2, except that the undercoat had a thickness of 30 µm.

### Example 8

The Example 8 was the same as the Example 2, except that the undercoat had a thickness of 40 µm.

### Example 9

The Example 8 was the same as the Example 2, except that the undercoat had a thickness of 4 µm.

### Example 10

The Example 10 was the same as the Example 2, except that 1 part by weight of the aluminum powder was used in the topcoat and a mass percentage of the aluminum powder in the topcoat was 2%.

### Example 11

The Example 11 was the same as the Example 2, except that 2 parts by weight of the aluminum powder were used in the topcoat and a mass percentage of the aluminum powder in the topcoat was 5%.

### Example 12

The Example 2 was the same as the Example 2, except that 0.5 part by weight of the aluminum powder was used in the topcoat and a mass percentage of the aluminum powder in the topcoat was 5%.

### Example 13

The Example 13 was the same as the Example 2, except that 8 parts by weight of the aluminum powder were used in the topcoat and a mass percentage of the aluminum powder in the topcoat was 20%.

### Example 14

The Example 14 was the same as the Example 2, except that the topcoat had a thickness of 20 µm.

### Example 15

The Example 15 was the same as the Example 2, except that the topcoat had a thickness of 5 µm.

### Example 16

The Example 16 was the same as the Example 2, except that the topcoat had a thickness of 30 µm.

### Example 17

The Example 17 was the same as the Example 2, except that the aluminum powder had a particle size of 20 µm.

### Example 18

The Example 18 was the same as the Example 1, except that the titanium oxide in the undercoat was replaced with 15 parts by weight of zinc oxide.

### Example 19

The Example 19 was the same as the Example 1, except that the titanium oxide in the undercoat was replaced with 15 parts by weight of alumina oxide.

### Example 20

The Example 20 was the same as the Example 2, except that the titanium oxide in the undercoat was replaced with 15 parts by weight of zinc oxide.

### Example 21

The Example 21 was the same as the Example 2, except that the titanium oxide in the undercoat was replaced with 15 parts by weight of alumina oxide.

### Example 22

The Example 22 was the same as the Example 2, except that the aluminum powder in the topcoat was replaced with 1.2 parts by weight of silver powder.

### Performance test

1. Test Method and Rating Criteria for Adhesion Force are as follows (cross-cut test).

The test method includes: cutting a surface of a test sample using a cross-cut tester to form 10 × 10 (100) small grids (1 mm × 1 mm), each cutting line being deep to an undercoat of the non-stick coating; cleaning away fragments in a test region using a brush; firmly adhering the small grids to be tested by using 3M600 adhesive tape or an adhesive tape of equal effect, and wiping the adhesive tape hard by using an eraser to increase a contact area and contact strength between the adhesive tape and the test region; and after standing still for 3 minutes to 5 minutes, grasping an end of the adhesive tape with a hand, quickly pulling off the adhesive paper in a vertical direction (90°/60°), and performing the same test at the same position twice. Adhesion force determining criteria is as follows.

Level 0: a cutting edge is completely smooth with no grid falling off.

Level 1: a little coating at an intersection of the cuts peels off, but a cross-cut area affected cannot be significantly greater than 5%.

Level 2: the coating peels off at the intersection of the cuts or along the cut edge. The cross-cut area affected is significantly greater than 5%, but cannot be significantly greater than 15%.

Level 3: the coating peels off along the cutting edge partially or completely in large fragments, and/or the coating on different positions in the grids partially or completely peels off. The cross-cut area affected is significantly greater than 15%, but cannot be significantly greater than 35%.

Level 4: the coating peels off along the cutting edge in large fragments and/or the coating on some grids peels off. The cross-cut area affected is significantly greater than 35%, but cannot be significantly greater than 65%.

Level 5: a degree of peeling off exceeds that of the level 4.

2. Non-stick performance test method and criteria are as follows:
The test method includes: 1. pouring a proper amount of vegetable oil into a cooking utensil, and wiping a non-stick surface of the cooking utensil with a soft cloth until the surface is uniformly coated with the vegetable oil;
2. cleaning with warm water added with a neutral detergent at a temperature higher than 60°C, washing with clean water, and wiping dry; and
3. placing and heating the cooking utensil on an electric furnace having a rated voltage of 220 V and an output power of 1 kW, measuring the temperature using a surface thermometer having an accuracy of not less than 2.5 levels, and when a surface temperature of the non-stick coating reaches 150°C to 170°C, putting a fresh egg having a weight of 50g to 60 g into the cooking utensil after the egg shell is broken, and waiting until the egg white substantially coagulates (the surface temperature of the non-stick coating does not exceed 210°C during the entire cooking process).

The non-stick performance determination criteria are as follows: the egg was taken out with no damage and no residue left by a plastic shovel having a blade thickness of 0.2 mm to 0.5 mm. When 10 or more eggs are continuously fried and taken out with no damage and no residue left, the non-stick performance is level 1. When 5 eggs are continuously fried and taken out with no damage and no residue is left, the non-stick performance is level 2. When 1 egg is continuously fried and taken out with no damage and no residue left, the non-stick performance is level 3. When no egg can be taken out in a complete form but no residue is left, the non-stick performance is level 4. When no egg can be taken out in a complete form and residues are left, the non-stick performance is level 5.

### 3. Color difference test

The specific test method includes: measuring a color difference by a color difference tester, with a stainless steel metal substrate (not heated) as a benchmark, a color difference ΔE being equal to 0 (the smaller the ΔE, the smaller the color difference). The color difference ΔE between the stainless steel metal substrate after being heated at 350°C and the stainless steel metal substrate before being heated was 32.76.

Performance test results of the examples and the comparative example are illustrated in Table 1 below.

**Table 1**

| | Undercoat | | | Topcoat | | | ΔE (color difference between unheated sample and benchmark substrate/color difference between sample after being heated at 350 °C and benchmark substrate) | Color difference change before and after heating | Non-stick performance | Adhesion force | Cracking or not |
|---|---|---|---|---|---|---|---|---|---|---|---|
| | Titanium oxide | | Thick ness | Aluminum powder | | Thick ness | | | | | |
| | Content | Particle size | | Content | Particle size | | | | | | |
| Example 1 | 10 | 10 | 6 | - | - | - | 9.33/9.66 | 0.33 | - | - | - |
| Comparative example 1 | - | - | - | - | - | - | 30/31.65 | 1.65 | - | - | - |
| Example 2 | 10 | 10 | 6 | 3 | 3 | 8 | 3.07/3.08 | 0.01 | 1 | 0 | not |
| Example 3 | 27 | 10 | 6 | 3 | 3 | 8 | 3.05/3.16 | 0.09 | 1 | 1 | not |
| Example 4 | 4 | 10 | 6 | 3 | 3 | 8 | 22.65/25.42 | -0.23 | 1 | 0 | not |
| Example 5 | 45 | 10 | 6 | 3 | 3 | 8 | 3.06/3.10 | 0.04 | 1 | 3 | not |
| Example 6 | 10 | 40 | 6 | 3 | 3 | 8 | 18.35/22.68 | 4.33 | 1 | 1 | not |
| Example 7 | 10 | 10 | 30 | 3 | 3 | 8 | 3.07/3.12 | 0.05 | 1 | 3 | not |
| Example 8 | 10 | 10 | 40 | 3 | 3 | 8 | 2.78/2.87 | 0.09 | 3 | 2 | not |
| Example 9 | 10 | 10 | 4 | 3 | 3 | 8 | 20.33/20.32 | -0.01 | 1 | 1 | not |
| Example 10 | 10 | 10 | 6 | 2 | 3 | 8 | 4.52/3.56 | 0.04 | 1 | 0 | not |
| Example 11 | 10 | 10 | 6 | 5 | 3 | 8 | 3.88/3.55 | -0.33 | 1 | 0 | not |
| Example 12 | 10 | 10 | 6 | 1 | 3 | 8 | 18.78/20.22 | 2.44 | 1 | 0 | not |
| Example 13 | 10 | 10 | 6 | 20 | 3 | 8 | 5.62/6.75 | 1.13 | 3 | 1 | not |
| Example 14 | 10 | 10 | 6 | 3 | 3 | 20 | 3.88/3.56 | -0.32 | 1 | 0 | not |
| Example 15 | 10 | 10 | 6 | 3 | 3 | 5 | 5.66/6.35 | 0.69 | 4 | 0 | not |
| Example 16 | 10 | 10 | 6 | 3 | 3 | 30 | 4.55/4.32 | -0.23 | 4 | 1 | not |
| Example 17 | 10 | 10 | 6 | 3 | 20 | 8 | 2.35/2.65 | 0.3 | 2 | 0 | not |
| Example 18 | 10 (zinc oxide) | 10 | 6 | - | - | - | 18.33/19.25 | 0.92 | 2 | 0 | not |
| Example 19 | 10 (aluminu m oxide) | 10 | 6 | - | - | - | 13.34/14.22 | 0.88 | 1 | 0 | not |
| Example 20 | 10 (zinc oxide) | 10 | 6 | 3 | 3 | 8 | 5.65/6.75 | 1.1 | 1 | 0 | not |
| Example 21 | 10 (aluminu m oxide) | 10 | 6 | 3 | 3 | 8 | 4.35/6.21 | 1.86 | 1 | 0 | not |
| Example 22 | 10 | 10 | 6 | 3 (silver powder) | 3 | 8 | 3.45/3.11 | -0.34 | 1 | 0 | not |

The color difference between the unheated sample and the benchmark substrate mainly reflects the color of the non-stick coating itself. However, a smaller change of the color difference between the sample and the benchmark substrate before and after heating (including becoming larger and smaller) represents that the non-stick coating has a better yellowing resistant performance and a better shielding force. Based on this, it can be seen from the above data:
1. When the undercoat and the topcoat each contain the pigment, the shielding effect is better than the case where only the undercoat contains the pigment.
2. As the content of the pigment in the undercoat increases, the shielding force becomes better, but the bonding force decreases. As the content of the pigment in the undercoat decreases, the shielding force decreases.
3. As the thickness of the undercoat increases, cracking is more likely to occur. As the thickness of the undercoat decreases, the shielding force decreases.
4. As the content of the pigment in the topcoat increases, the shielding force increases first and then decreases, indicating that the suspension increases and the non-stick performance degrades as the content increases.
5. As the particle size of the pigment in the topcoat increases, the shielding force decreases.
7. As the thickness of the topcoat increases or decreases, the non-stick performance degrades, and the increase of the thickness increases a probability of cracking.

To sum up, when the non-stick coating is added with a material, which has a proper content and a proper particle size and is adapted to shield the hue of the substrate material and form the undercoat having the moderate thickness, the high temperature yellowing problem of the non-stick coating and the high temperature yellowing problem of the substrate material can be effectively solved on the basis of no change in the performance of the non-stick coating. The color difference of the sample after high temperature heating (350 °C) is small, which can satisfy the requirements of the cooking device.

It should be understood that, in the description of the present disclosure, terms such as "first" and "second" are used for the purpose of description, and should not be construed as indicating or implying any relative importance or implicitly indicating the number of defined technical features. Thus, the features defined with "first" and "second" explicitly or implicitly include at least one or more such feature. In the description of the present disclosure, "a plurality of" means two or more, unless specifically defined otherwise.

In the description of the present disclosure, description with reference to terms "an embodiment", "some embodiments", "an example", "a specific example", "some examples" or the like means that specific features, structures, materials, or characteristics described in conjunction with the embodiment or example are included in at least one embodiment or example of the present disclosure. In the present disclosure, any illustrative representations of the above terms do not necessarily refer to the same embodiment or example. Moreover, the specific features, structures, materials or characteristics as described can be combined in any one or more embodiments or examples in an appropriate manner. In addition, those skilled in the art can combine and integrate different embodiments or examples, or features thereof, as described in the present disclosure, provided that they do not contradict each other.

Although embodiments of present disclosure have been shown and described above, it can be understood that the above-mentioned embodiments are explanatory and should not be construed as limiting the present disclosure. Those of ordinary skilled in the art can make changes, modifications, substitutions, and variations to the above-mentioned embodiments within the scope of the present disclosure.

## Claims

1. A non-stick coating, comprising:
an undercoat, wherein a hue of at least one material in the undercoat is adapted to shield a hue of a substrate material; and
a topcoat disposed on a surface of the undercoat facing away from the substrate material, the topcoat comprising a fluorine-containing resin.

2. The non-stick coating according to claim 1, wherein the hue of the at least one material in the undercoat is adapted to shield a hue change of the substrate material.

3. The non-stick coating according to claim 1 or 2, wherein the hue of the at least one material in the undercoat shields at least 90% of the hue of the substrate material, or the hue of the at least one material of the undercoat shields at least 90% of a hue change of the substrate material.

4. The non-stick coating according to any one of claims 1 to 3, wherein the undercoat comprises a first pigment having a first hue adapted to shield the hue of the substrate material.

5. The non-stick coating according to any one of claims 1 to 4, wherein the topcoat comprises a second pigment, a hue of the second pigment being identical to or different from the hue of the first pigment.

6. The non-stick coating according to claim 5, wherein a color difference ΔE between a hue of the non-stick coating and the hue of the substrate material ranges from 2 to 8, with the hue of the substrate material that is unheated as a benchmark.

7. The non-stick coating according to claim 6, wherein the color difference ΔE between the hue of the non-stick coating and the hue of the substrate material ranges from 2.5 to 6.

8. The non-stick coating according to claim 5, taking on the hue of the second pigment or a hue between the hue of the first pigment and the hue of the second pigment.

9. The non-stick coating according to claim 5, wherein the first pigment comprises at least one of a white pigment or a whitish pigment, and wherein the second pigment comprises a metallic-colored pigment.

10. The non-stick coating according to claim 9, wherein a color difference between the hue of the first pigment and a white hue ranges from 0 to 30, with the white hue as a benchmark.

11. The non-stick coating according to claim 10, wherein the color difference between the hue of the first pigment and the white hue ranges from 0 to 15, with the white hue as the benchmark.

12. The non-stick coating according to claim 9, wherein
the metallic-colored pigment is a flake-shaped pigment; and
orthographic projections of at least two flakes of the flake-shaped pigment in a direction perpendicular to the non-stick coating overlap with each other.

13. The non-stick coating according to claim 5, wherein a hue taken on by the non-stick coating is substantially identical to the hue of the substrate material.

14. The non-stick coating according to claim 5, wherein
the undercoat comprises a first matrix resin and the first pigment dispersed in the first matrix resin; and
the undercoat satisfies at least one of the following conditions:
the first pigment comprises a white pigment, the white pigment comprising at least one of titanium, a titanium compound, zinc oxide, aluminum oxide, or mica;
the first pigment has a particle size ranging from 5 µm to 25 µm;
the first matrix resin comprises at least one of polyethersulfone or polytetrafluoroethylene;
the undercoat has a thickness ranging from 6 µm to 30 µm; or
a mass percentage of the first pigment ranges from 5% to 40%, preferably from 10% to 27%, based on a total mass of the undercoat.

15. The non-stick coating according to claim 5, wherein
the topcoat comprises the fluorine-containing resin and the second pigment dispersed in the fluorine-containing resin; and
the topcoat satisfies at least one of the following conditions:
the second pigment comprises a metallic-colored pigment, the metallic-colored pigment comprising at least one of silver powder or aluminum powder;
the fluorine-containing resin comprises polytetrafluoroethylene;
the topcoat has a thickness ranging from 8 µm to 20 µm; or
a mass percentage of the second pigment ranges from 1.5% to 12%, based on a total mass of the topcoat.

16. The non-stick coating according to claim 14 or 15, satisfying at least one of the following conditions:
the titanium compound comprises titanium oxide; or
the silver powder and the aluminum powder each independently have a particle size ranging from 2 µm to 70 µm, preferably from 3 µm to 20 µm.

17. The non-stick coating according to claim 14 or 15, satisfying at least one of the following conditions:
the undercoat further comprises at least one of a high temperature resistant resin, a first surfactant, a first pH regulator, or a wear resistant particle; or
the topcoat further comprises at least one of a second surfactant or a second pH regulator.

18. The non-stick coating according to claim 17, satisfying at least one of the following conditions:
the high temperature resistant resin comprises at least one of polyphenylene sulfide, polyamide-imide, or polyetheretherketone;
the first surfactant and the second surfactant each independently comprise at least one of a nonionic surfactant or an anionic surfactant;
the first pH regulator and the second pH regulator each independently comprise at least one of ammonia water, triethylamine, or diethanolamine; or
the wear resistant particle comprises at least one of Al₂O₃, SiO₂, or SiC.

19. The non-stick coating according to claim 14 or 15, wherein
the first matrix resin is a mixture of polyethersulfone and polytetrafluoroethylene;
the white pigment is titanium oxide;
the fluorine-containing resin is polytetrafluoroethylene; and
a metallic-colored pigment is silver powder or aluminum powder.

20. A non-stick coating material group, comprising:
an undercoat material, wherein a hue of at least one material in the undercoat material is adapted to shield a hue of a substrate material; and
a topcoat material comprising a fluorine-containing resin.

21. The non-stick coating material group according to claim 20, wherein
the undercoat material comprises:
| | |
|---|---|
| a first matrix resin dispersion liquid | 30 parts to 50 parts by weight; |
| a high temperature resistant resin | 10 parts to 30 parts by weight; |
| a first solvent | 20 parts to 50 parts by weight; |
| a first pigment | 1 part to 12 parts by weight; |
| a first surfactant | 0 part to 10 parts by weight; |
| deionized water | 0 part to 50 parts by weight; |
| a first pH regulator | 0 part to 1 part by weight; and |
| a wear resistant particle | 0 part to 3 parts by weight; and |
the topcoat material comprises:
| | |
|---|---|
| a fluorine-containing resin emulsion | 45 parts to 70 parts by weight; |
| a second solvent | 3 parts to 20 parts by weight; |
| a second pigment | 0.5 part to 5 parts by weight; |
| a second surfactant | 0 part to 10 parts by weight; |
| deionized water | 10 parts to 50 parts by weight; and |
| a second pH regulator | 0 part to 1 part by weight. |

22. The non-stick coating material group according to claim 20 or 21, used to form the non-stick coating according to any one of claims 1 to 19, wherein
the undercoat material is used to form the undercoat; and
the topcoat material is used to form the topcoat.

23. A cooking device, comprising:
a metal substrate; and
a non-stick coating disposed on a surface of the metal substrate, the non-stick coating being the non-stick coating according to any one of claims 1 to 19, or a non-stick coating formed by the non-stick coating material group according to any one of claims 20 to 22.

24. The cooking device according to claim 23, wherein
a hue of at least part of the cooking device in an initial state is identical to a hue of the at least part of the cooking device in a heated state; or
a color difference ΔE between the hue of the at least part of the cooking device in the initial state and the hue of the at least part of the cooking device in the heated state is smaller than 4.

25. The cooking device according to claim 23, wherein
a hue of at least part of the cooking device in an initial state is identical to a hue of the at least part of the cooking device in a heated state; or
a color difference ΔE between the hue of the at least part of the cooking device in the initial state and the hue of the at least part of the cooking device in the heated state is smaller than 2.

26. The cooking device according to any one of claims 23 to 25, wherein the metal substrate comprises stainless steel.

27. The cooking device according to any one of claims 23 to 26, wherein
a surface of the metal substrate is a flat surface, the non-stick coating being disposed on the flat surface; or
the surface of the metal substrate has a plurality of recessed portions arranged at intervals, raised surfaces being formed between the plurality of recessed portions, and the non-stick coating being disposed on an inner wall of each of the plurality of recessed portions.

28. The cooking device according to claim 27, wherein in each of the plurality of recessed potions, a surface of the non-stick coating facing away from the metal substrate is a curved surface having a middle portion convex towards the metal substrate, and is lower than the raised surfaces.

29. The cooking device according to claim 27, wherein
an inner wall surface of each of the plurality of recessed portions is a continuous arc surface; and
in each of the plurality of recessed portions, a bottom of the non-stick coating has a thickness greater than a thickness of a side wall of the non-stick coating.

30. The cooking device according to claim 27, wherein in each of the plurality of recessed portions, the non-stick coating has a thickness gradually increasing in a direction from a top of the recessed portion to a bottom of the recessed portion.

31. The cooking device according to claim 27, wherein a color of the non-stick coating is substantially identical to a color of the raised surfaces.

32. The cooking device according to claim 23, wherein
the non-stick coating is constructed as a continuous arc surface; and
the undercoat and the topcoat in the non-stick coating are each constructed as a continuous arc surface.
